Europäisches Patentamt

European Patent Office

Office européen des brevets

(11) Veröffentlichungsnummer: **0 029 530**
**B1**

(12) **EUROPÄISCHE PATENTSCHRIFT**

(51) Int. Cl.³: **D 21 H 3/40, C 08 F 8/46**

(45) Veröffentlichungstag der Patentschrift:
29.12.82

(21) Anmeldenummer: 80106807.3

(22) Anmeldetag: 05.11.80

54 Verfahren zur Masseleimung von Papier.

(30) Priorität: 23.11.79 DE 2947174
23.11.79 DE 2947175

(43) Veröffentlichungstag der Anmeldung:
03.06.81 Patentblatt 81/22

(45) Bekanntmachung des Hinweises auf die Patenterteilung:
29.12.82 Patentblatt 82/52

(84) Benannte Vertragsstaaten:
AT BE CH DE FR GB IT LI NL SE

(56) Entgegenhaltungen:
EP-A-0 001 868
CHEMICAL ABSTRACTS, Band 91, Nr. 10, 3.
September 1979, Seiten 79—80, Zusammenfassung
Nr. 75 949d, Columbus, Ohio, US
ABSTRACT BULLETIN OF THE INSTITUTE OF
PAPER CHEMISTRY, Band 48, Nr. 10, April 1978,
Appleton, WI, US, M. NAGANO: »Surface sizing
method« Seite 1136, Zusammenfassung Nr. 10 631
Chemical Abstracts, Band 88, 24 456w (1978)

Die Akte enthält technische Angaben, die nach dem
Eingang der Anmeldung eingereicht wurden und die
nicht in dieser Patentschrift enthalten sind.

(73) Patentinhaber: BASF Aktiengesellschaft,
Carl-Bosch-Strasse 38, D-6700 Ludwigshafen (DE)

(72) Erfinder: Hoenl, Hans, Dr., Hauptstrasse 69,
D-6719 Obersuelzen (DE)
Erfinder: Bronstert, Klaus, Dr., Gartenstrasse 26,
D-6719 Carlsberg 1 (DE)

## Verfahren zur Masseleimung von Papier

Die Erfindung betrifft ein Verfahren zur Masseleimung von Papier unter Verwendung von substituierten Bernsteinsäureanhydriden.

Um die Eindringgeschwindigkeit von Wasser und anderen Flüssigkeiten in Papier auf ein bestimmtes Maß zu reduzieren, ist es erforderlich, die Papiere zu leimen, d. h. partiell zu hydrophobieren. Das Papier ist erst nach dem Leimen beschreibbar und bedruckbar.

Die Leimung von Papieren und Kartons kann mit Hilfe von Leimungsmitteln erfolgen, die entweder dem Papierstoff vor der Blattbildung zugesetzt werden (Masseleimung) oder die auf die fertige Papierbahn mittels geeigneter Auftragsvorrichtungen, wie Leimpressen oder Sprühvorrichtungen, aufgebracht werden (Oberflächenleimung). Das bekannteste Masseleimungsmittel ist der Harzleim auf Kolophoniumbasis. Die hierdurch erzielbare Leimung des Papiers ist als sehr gut anzusprechen, jedoch ist die Ausbildung einer Leimung an die Anwesenheit einer ziemlich hohen Menge an Aluminiumsulfat gebunden.

Aus der US-A-3 102 064 ist ein Verfahren zur Masseleimung von Papier bekannt, bei dem substituierte cyclische Carbonsäureanhydride, z. B. substituierte Bernsteinsäureanhydride oder substituierte Glutarsäureanhydride als Masseleimungsmittel eingesetzt werden. Die genannten Carbonsäureanhydride können als Substituenten Alkyl-, Alkenyl-, Aralkyl- oder auch Aralkenyl-Gruppen enthalten. Die Leimungswirkung dieser Masseleimungsmittel läßt noch zu wünschen übrig.

Aus der DE-A-2 804 202 ist die Verwendung wäßriger Emulsionen substituierter Bernsteinsäureanhydride als Leimungsmittel bekannt, bei dem die Substituenten Oligomere von Butenen mit 16 bis 40 Kohlenstoffatomen darstellen.

Aus der DE-A-2 828 383 sind Leimungsmittel für Papier bekannt, die durch Umsetzung von Maleinsäureanhydrid mit Butadienpolymeren eines Molekulargewichts von 500 bis 10 000 erhalten werden. Vorzugsweise werden Bernsteinsäureanhydridderivate eingesetzt, deren Molekulargewichte 800 bis 1400 betragen. Die Leimungswirkung der bekannten substituierten Bernsteinsäureanhydride läßt zu wünschen übrig.

Aufgabe der Erfindung ist es, für die Masseleimung von Papier ein Leimungsmittel zur Verfügung zu stellen, das gegenüber den bekannten Leimungsmitteln auf der Basis von substituierten Bernsteinsäureanhydriden verbesserte Leimungswerte ergibt, insbesondere Papier mit erhöhter Tintenschwimmzeit.

Die Aufgabe wird erfindungsgemäß bei dem eingangs beschriebenen Verfahren dadurch gelöst, daß substituierte Bernsteinsäureanhydride eingesetzt werden, die durch Umsetzung von 12 bis 30 Kohlenstoffatome enthaltenden Oligomeren des Propylens oder Co-Oligomeren mit 16 bis 24 Kohlenstoffatomen aus Butadien und Butenen mit Maleinsäureanhydrid bei Temperaturen von 150 bis 250° C hergestellt werden.

Oligomere des Propylens sind im Handel erhältlich. Sie werden durch Oligomerisierung von Propylen in Gegenwart von z. B. Lewis-Säuren erhalten. Beispielsweise werden hierfür Bortrifluorid oder Phosphorsäure, die auf geeignete Trägermaterialien aufgebracht ist (vgl. US-A-3 244 767), als Initiatoren verwendet.

Die Oligomeren des Propylens enthalten in allen Fällen eine äthylenisch ungesättigte Doppelbindung. Die Oligomerisierung des Propylens ist eine komplexe Reaktion, bei der keineswegs einheitliche Reaktionsprodukte entstehen, die mit Hilfe einer Formel beschrieben werden können. Es liegen vielmehr Mischungen verschiedener Oligomerer vor, deren Kohlenstoffzahl nicht immer ein Vielfaches von 3 sein muß. In der Regel liegen Gemische von Oligomeren vor, deren Kohlenstoffzahlen beispielsweise 15, 16, 17, 18 und 19 betragen können. Vorzugsweise verwendet man zur Herstellung der erfindungsgemäß zu verwendenden Masseleimungsmittel Oligomere des Propylens, deren Kohlenstoffzahl 15 bis 19 beträgt. Oligomere des Propylens mit Kohlenstoffzahlen von beispielsweise 16, 17 und 19 entstehen aufgrund von Nebenreaktionen des Propylens mit dem Katalysator bei der Oligomerisierung von Propylen. Auch diese Reaktionsprodukte werden im Sinne der vorliegenden Erfindung als Oligomere des Propylens bezeichnet.

Niedrigmolekulare Copolymerisate, die 16 bis 24 Kohlenstoffatome enthalten, und aus Butadien-Einheiten und Einheiten von Butenen bestehen, sind bekannt. Sie werden als Co-Oligomere bezeichnet und beispielsweise durch Copolymerisieren von Butadien-1,3 mit Isobuten und/oder Buten-1 und/oder Buten-2 nach bekannten Verfahren bei höheren Temperaturen unter Druck hergestellt. Vorzugsweise unterwirft man Fraktionen von ungesättigten und gesättigten Kohlenwasserstoffen mit 4 C-Atomen im Molekül, die z. B. bei der Fraktionierung von Erdöl anfallen, der Copolymerisation. Diese Fraktionen werden im technischen Sprachgebrauch als $C_4$-Schnitt bezeichnet. Die Copolymerisation kann beispielsweise in dem Temperaturbereich von 25 bis 250° C kontinuierlich oder diskontinuierlich durchgeführt werden. Bei höheren Temperaturen wählt man kürzere Verweilzeiten in der Polymerisationszone. Zur Initiierung der Polymerisation verwendet man kationische Polymerisationsinitiatoren wie Bortrifluorid, Bortrifluoridätherate, Aluminiumchlorid und anorganische Mineralsäuren wie Phosphorsäure. Außerdem ist es möglich, Trägerkatalysatoren zu verwenden, die kationische Polymerisationskatalysatoren enthalten. Die Copolymerisate enthalten 5

2

bis 95, vorzugsweise 30 bis 50 Gew.-% Butadien-1,3 und 95 bis 5, vorzugsweise 70 bis 50 Gew.-% mindestens eines Butens einpolymerisiert. Die Copolymerisate werden vorzugsweise nach der Herstellung einer Destillation unter vermindertem Druck unterworfen. Für die Herstellung substituierter Bernsteinsäureanhydride geeignete Butadiencopolymerisate haben bei einem Druck von 2 mbar einen Siedebereich von 80 bis 220° C. Die Copolymerisate weisen 1,5 bis 2,0, vorzugsweise 1,5 bis 1,7 Doppelbindungen pro Molekül auf.

Die Umsetzung der Oligomeren des Propylens und der Butadien-Co-Oligomeren mit Maleinsäureanhydrid wird bei Temperaturen von 150 bis 250° C durchgeführt. Die Oligomeren können dabei im Überschuß eingesetzt werden, z. B. im Gew.-Verhältnis 1,1 : 1 bis 10 : 1. Man erhält dabei substituierte Bernsteinsäureanhydride, bei denen es sich um 1 : 1-Addukte (Molverhältnis) der Oligomeren an Maleinsäureanhydrid handelt. Die Umsetzung mit dem Maleinsäureanhydrid kann in Substanz oder in inerten Lösungsmitteln vorgenommen werden. Bei diesen Lösungsmitteln handelt es sich um aprotische Lösungsmittel, die nicht mit Maleinsäureanhydrid bzw. den substituierten Bernsteinsäureanhydriden reagieren. Solche Lösungsmittel sind beispielsweise aromatische Kohlenwasserstoffe, wie Benzol, Toluol, Xylol und Tetralin sowie Trichlorbenzol, Tetrachloräthylen und Chlorbenzol. Die Umsetzung des Maleinsäureanhydrids mit den Butadiencopolymerisaten wird vorzugsweise unter Ausschluß von Sauerstoff durchgeführt. Man arbeitet in einer Stickstoffatmosphäre und verwendet ggf. noch Antioxidantien, z. B. Phenothiazin oder Hydrochinon. Nach der Umsetzung wird das ggf. anwesende Lösungsmittel abdestilliert und das Reaktionsprodukt im Vakuum destilliert. Die substituierten Bernsteinsäureanhydride, die erfindungsgemäß als Masseleinungsmittel für Papier verwendet werden, haben einen Siedepunkt bei 2 mbar von 200 bis 300° C. Es handelt sich hierbei um Produkte, die auch bei Raumtemperatur flüssig sind.

Um die substituierten Bernsteinsäureanhydride als Masseleimungsmittel anzuwenden, ist es unerläßlich, sie in Wasser zu dispergieren. Da es sich bei den erfindungsgemäß zu verwendenden Verbindungen um bei Raumtemperatur flüssige Produkte handelt, bereits das Dispergieren der Produkte in Wasser keine Schwierigkeiten. Eine Dispergierung gelingt beispielsweise schon rein mechanisch durch kräftiges Rühren. Besonders leicht lassen sich die Leimungsmittel mit Hilfe von kationischer Stärke emulgieren. Als kationische Stärken können handelsübliche Amin-Stärkederivate und andere kationische stickstoffsubstituierte Stärkederivate sowie kationische Sulfonium- und Phosphonium-Stärkederivate verwendet werden. Diese Derivate können aus den üblichen Stärken, wie Weizenstärke, Kartoffelstärke, Maisstärke und Reisstärke hergestellt werden. Zum Emulgieren der substituierten Bernsteinsäureanhydride benötigt man pro Gew.-Teil des substituierten Bernsteinsäureanhydrids 0,2 bis 2,0 Teile der kationischen Stärke.

Eine weitere Möglichkeit, die erfindungsgemäß zu verwendenden Leimungsmittel in Wasser zu dispergieren, besteht in der Verwendung von Emulgatoren. Geeignete Emulgatoren sind beispielsweise Anlagerungsprodukte von Äthylenoxid an $C_8$- bis $C_{20}$-Fettalkohole, Fettsäuren oder Fettamine entsprechender Kohlenstoffzahl.

Für die Papierleimung benötigt man, bezogen auf das Gewicht der trockenen Papierfasern, 0,1 bis 0,5 Gew.-% der erfindungsgemäß zu verwendenden substituierten Bernsteinsäureanhydride. Sofern Emulgatoren oder Schutzkolloide zum Emulgieren der erfindungsgemäß zu verwendenden Bernsteinsäureanhydride verwendet werden, setzt man diese Stoffe in einer Menge von 0,2 bis 2,0 Teilen pro Teil des Leimungsmittel ein.

Die Leimungswirkung der erfindungsgemäß zu verwendenden Leimungsmittel kann noch verbessert werden, wenn man zusätzlich kationische Retentionsmittel bei der Leimung mit verwendet. Geeignete kationische Retentionsmittel sind beispielsweise kationisch modifizierte Polymerisate von Amiden, äthylenisch ungesättigter $C_3$- bis $C_5$-Carbonsäuren, wie kationisch modifiziertes Polyacrylamid oder Polymethacrylamid sowie Polyäthylenimin und wasserlösliche vernetzte Kondensationsprodukte aus Adipinsäure und Polyalkylenpolyaminen. Die Kondensationsprodukte aus Adipinsäure und Polyalkylenpolyaminen können mit Äthylenimin gepfropft und anschließend mit difunktionellen Vernetzern, wie Epichlorhydrin oder $\alpha$-$\omega$-Dichlorhydrinäthern von Polyalkylenglykolen vernetzt werden. Produkte der genannten Art sind im Handel erhältlich. Sie werden bei dem erfindungsgemäßen Verfahren, bezogen auf trockenen Faserstoff, in einer Menge von 0,01 bis 0,3 Gew.-% eingesetzt.

Die in den Beispielen angegebenen Teile sind Gew.-Teile, die Angaben in Prozent beziehen sich auf das Gewicht der Stoffe. Die Wirksamkeit der Leimungsmittel wurde mit Hilfe der Tintenschwimmprobe bis zum 50%igen Durchschlag beurteilt, wobei eine Prüftinte gemäß DIN 53 126 verwendet wurde.


### Beispiel 1


### A. Herstellung der Leimungsmittel


Ein $C_4$-Schnitt, der 38% Butadien, 27% Isobuten, 17% Buten-1, 11% Buten-2, 5% n-Butan und 2% Isobutan enthielt, wurde in Gegenwart von Bortrifluorid bei einer Temperatur von 125° C innerhalb von

3

0,5 Stunden in einem Autoklav der Copolymerisation unterworfen. Man erhielt ein Butadien-Isobuten-Buten-Copolymerisat, das destillativ getrennt wurde. Folgende Fraktionen wurden isoliert:

| Fraktion | $Kp_{2mbar}$ | Gehalt an | |
|---|---|---|---|
| | | C-Atom/ Molekül | Doppelbindungen/ Molekül |
| 1 | 80—120 | 16 | 1,5 |
| 2 | 120—160 | 20 | 1,6 |
| 3 | 160—200 | 24 | 1,7 |

und anschließend der Maleinierung unterworfen. Hierzu wurden jeweils die Fraktion 1 bis 3 mit Maleinsäureanhydrid im Gew.-Verhältnis 2 : 1 bei einer Temperatur von 185°C innerhalb von 10 Stunden zur Reaktion gebracht. Hierbei wurden den Fraktionen 1 bis 3 entsprechende Leimungsmittel 1 bis 3 erhalten, wobei es sich jeweils um substituierte Bernsteinsäureanhydride handelte, bei denen der Substituent des Leimungsmittels 1 16, der des Leimungsmittels 2 20 und der des Leimungsmittels 3 24 Kohlenstoffatome aufwies.

Zum Vergleich mit dem Stand der Technik wurde als Vergleich 1 Isooctadecenylbernsteinsäureanhydrid (gemäß US-A-3 102 064) und als Vergleich 2 maleiniertes Tetrabuten (gemäß DE-A-2 804 202) verwendet.


### B. Prüfung der Leimungswirkung

Um die Leimungswirkung der oben angegebenen Stoffe zu prüfen, wurden jeweils 2,5 Teile der Leimungsmittel zu 500 Teilen einer 0,5%igen wäßrigen Lösung einer handelsüblichen kationischen Stärke gegeben und 3 Minuten der Wirkung eines Emulgiergerätes ausgesetzt. Es resultierten jeweils 0,5%ige Leimungsmitteldispersionen.

Zu einer 0,5%igen wäßrigen Faserstoffaufschlämmung (pH-Wert 7,5) aus gebleichtem Sulfitzellstoff mit einem Mahlgrad von 35° S. R., die 0,1%, bezogen auf trockenen Zellstoff, eines handelsüblichen wasserlöslichen vernetzten Polyamidoamins enthielt (hergestellt durch Kondensation von Adipinsäure und Diäthylentriamin und anschließende Umsetzung des Kondensationsproduktes mit Epichlorhydrin) werden jeweils soviel der einzelnen oben beschriebenen Leimungsmittel-Dispersionen zugegeben, daß der Gehalt an Leimungsmittel 0,4%, bezogen auf trockenen Faserstoff betrug. Auf einem Laborblattbildner wurden dann jeweils Blätter mit einem Gewicht von 80 g pro m² gebildet und anschließend in einem Trockenzylinder bei einer Temperatur von 90°C getrocknet. Für die einzelnen Leimungsmittel wurden dabei folgende Tintenschwimmzeiten ermittelt:

| | Tintenschwimmzeit (min) |
|---|---|
| Leimmittel 1 | 10 |
| Leimmittel 2 | 10 |
| Leimmittel 3 | 15 |
| Vergleich 1 | 2 |
| Vergleich 2 | 8 |


### Beispiel 2

Durch Umsetzung eines 15 bis 18 Kohlenstoffatome enthaltenden Oligomeren-Gemisches von Propylen mit Maleinsäureanhydrid bei einer Temperatur im Bereich von 180 bis 200°C wird ein substituiertes Bernsteinsäureanhydrid hergestellt. 2,5 Teile des Festprodukts werden dann in 500 Teilen einer 0,5%igen wäßrigen Lösung einer handelsüblichen kationischen Stärke gegeben und 3 Minuten der Wirkung eines Emulgiergerätes ausgesetzt. Man erhält eine 0,5%ige Leimungsmittel-Dispersion.

Zu einer 0,5%igen Pulpe (pH-Wert 7,5) aus gebleichtem Sulfitzellstoff mit einem Mahlgrad von 35° S. R., die 0,1% bezogen auf trockenen Zellstoff, eines handelsüblichen wasserlöslichen vernetzten Polyamidoamins enthielt (hergestellt durch Kondensation von Adipinsäure und Diäthylentriamin und anschließende Umsetzung des Kondensationsproduktes mit Epichlorhydrin), wurde soviel der oben beschriebenen Leimungsmittel-Dispersion zugegeben, daß der Gehalt an Leimungsmittel 0,4 bzw. 0,5%, bezogen auf trockenen Zellstoff, betrug.

**0 029 530**

Auf einem Laborblattbildner wurden dann jeweils Blätter mit einem Gewicht von 80 g/m² gebildet und anschließend in einem Trockenzylinder bei einer Temperatur von 90°C getrocknet. Bei einem Gehalt von 0,4% Leimungsmittel, bezogen auf trockenen Zellstoff, wurde ein geleimtes Papier mit einer Tintenschwimmzeit von 30 Minuten erhalten. Bei Einsatz von 0,5% Leimungsmittel, bezogen auf trockenen Zellstoff, betrug die Tintenschwimmzeit 60 Minuten.

Zum Vergleich mit dem Stand der Technik gemäß der US-A-3 102 064 wurde eine 0,5%ige wäßrige Leimungsmittel-Dispersion aus Isooctadecylbernsteinsäureanhydrid (Vergleich 1) und zum Vergleich mit dem Stand der Technik gemäß DE-A-2 804 202 eine 0,5%ige wäßrige Leimungsmittel-Dispersion von maleinisiertem Tetraisobuten (Vergleich 2) hergestellt. Die beiden Leimungsmittel-Dispersionen gemäß Stand der Technik wurden dann nach der im Beispiel angegebenen Vorschrift als Leimungsmittel getestet. Die dabei erhaltenen Ergebnisse sind in der folgenden Tabelle zusammengestellt und werden mit dem Leimungsmittel gemäß Erfindung verglichen:

|  | % (bezogen auf atro Zellstoff) | Tintenschwimmzeit (min) |
| --- | --- | --- |
| Leimungsmittel gemäß Beispiel 2 | 0,4 | 30 |
| Vergleich 1 | 0,4 | 2 |
| Vergleich 2 | 0,4 | 8 |
| Leimungsmittel gemäß Beispiel 2 | 0,5 | 60 |
| Vergleich 1 | 0,5 | 4 |
| Vergleich 2 | 0,5 | 33 |

**Patentansprüche**

1. Verfahren zur Masseleimung von Papier unter Verwendung von wäßrigen Emulsionen substituierter Bernsteinsäureanhydride, dadurch gekennzeichnet, daß substituierte Bernsteinsäureanhydride eingesetzt werden, die durch Umsetzung von 12 bis 30 Kohlenstoffatome enthaltenden Oligomeren des Propylens oder Co-Oligomeren mit 16 bis 24 Kohlenstoffatomen aus Butadien und Butenen mit Maleinsäureanhydrid bei Temperaturen von 150 bis 250°C hergestellt werden.

2. Verfahren gemäß Anspruch 1, dadurch gekennzeichnet, daß die substituierten Bernsteinsäureanhydride mit kationischer Stärke und/oder kationischen Emulgatoren in Wasser emulgiert werden.

3. Verfahren gemäß den Ansprüchen 1 und 2, dadurch gekennzeichnet, daß zusätzlich kationische Retentionsmittel zur Leimungsverbesserung eingesetzt werden.

**Claims**

1. Process for engine-sizing paper using aqueous emulsions of substituted succinic anhydrides, wherein substituted succinic anhydrides which are prepared by reacting propylene oligomers containing from 12 to 30 carbon atoms or co-oligomers of butadiene and butenes containing from 16 to 24 carbon atoms with maleic hydride at temperatures from 150 to 250°C are employed.

2. Process according to claim 1, wherein the substituted succinic anhydrides are emulsified in water with cationic starch and/or cationic emulsifiers.

3. Process according to claims 1 and 2, wherein cationic retention agents are additionally employed, to improve the sizing.

**Revendications**

1. Procédé de collage dans la masse de papier en utilisant des émulsions aqueuses d'anhydrides d'acide succinique substitués, caractérisé par le fait qu'on utilise des anhydrides d'acide succinique, substitués, qui ont été préparés par réaction d'oligomères de propylène contenant 12 à 30 atomes de carbone, ou de co-oligomères à 16 à 24 atomes de carbone, de butadiène et de butène avec de l'anhydride d'acide maléique, à des températures de 150 à 250°C.

5

**0 029 530**

2. Procédé selon la revendication 1, caractérisé par le fait que les anhydrides d'acide succinique substitués sont émulsifiés dans l'eau avec de l'amidon cationique et/ou des émulsifiants cationiques.

3. Procédé selon les revendications 1 et 2, caractérisé par le fait qu'on introduit additionellement un agent de rétention cationique pour eméliorer le collage.